(19) Europäisches Patentamt
European Patent Office
Office européen des brevets

(11) **EP 3 553 311 B1**

(12) **EUROPÄISCHE PATENTSCHRIFT**

(45) Veröffentlichungstag und Bekanntmachung des Hinweises auf die Patenterteilung:
**02.11.2022 Patentblatt 2022/44**

(21) Anmeldenummer: **19168376.2**

(22) Anmeldetag: **10.04.2019**

(51) Internationale Patentklassifikation (IPC):
**F03D 17/00** *(2016.01)* **F03D 7/02** *(2006.01)*

(52) Gemeinsame Patentklassifikation (CPC):
**F03D 17/00; F03D 7/0296;** F03D 7/0224;
F05B 2260/821; F05B 2270/326; F05B 2270/331;
F05B 2270/808; Y02E 10/72

(54) **VORRICHTUNG UND VERFAHREN ZUM STEUERN EINER WINDENERGIEANLAGE**

DEVICE AND METHOD FOR CONTROLLING A WIND TURBINE

DISPOSITIF ET PROCÉDÉ DE COMMANDE D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.04.2018 DE 102018002982**

(43) Veröffentlichungstag der Anmeldung:
**16.10.2019 Patentblatt 2019/42**

(73) Patentinhaber: **Siemens Gamesa Renewable Energy Service GmbH**
**20097 Hamburg (DE)**

(72) Erfinder:
• **Bestmann, Till**
**24105 Kiel (DE)**
• **Pleß, Timo**
**24783 Osterrönfeld (DE)**
• **Warfen, Karsten**
**23795 Weede/Söhren (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
WO-A1-2017/000960 WO-A1-2017/093512
US-A1- 2010 014 969 US-A1- 2016 138 571

**Beschreibung**

Die vorliegende Erfindung betrifft eine Vorrichtung und ein Verfahren zum Steuern einer Windenergieanlage.

Um einen zuverlässigen Betrieb von Windenergieanlagen zu gewährleisten, ist es bekannt, Regelmechanismen vorzusehen, mit deren Hilfe beispielsweise auf den Betrieb der Windenergieanlagen äußere Einflüsse reagiert werden kann. In Abhängigkeit von einer gemessenen Windgeschwindigkeit kann etwa einer aus verschiedenen Betriebsmodi ausgewählt werden, um die auf die Windenergieanlage wirkenden Belastungen innerhalb vorgegebener Grenzen zu halten. Eine übliche Maßnahme ist es beispielsweise, die Einstellwinkel von Rotorblättern eines Rotors der Windenergieanlage derart einzustellen, dass auf die Rotorblätter einwirkende Biegemomente einen Biegemomentschwellenwert nicht erreichen oder überschreiten.

Dabei können die auftretenden Biegemomente für jedes Rotorblatt individuell mittels mindestens drei auf den Umfang der Blattwurzel verteilten Sensoren, welche mindestens zwei Messachsen definieren, im Allgemeinen mindestens zwei Sensorpaaren, d.h. insgesamt mindestens vier Sensoren pro Rotorblatt, bestimmt und in Regelgrößen transformiert werden, welche beispielsweise zur Berechnung eines Regelfehlers herangezogen werden.

Das Dokument DE 102 19 664 A1 offenbart beispielsweise eine einem Rotor zugeordnete Sensoreinrichtung zum Erzeugen von Sensorsignalen in Abhängigkeit von der mechanischen Belastung des Rotors, wobei mindestens einem Rotorblatt des Rotors mindestens zwei, vorzugsweise paarweise, montierte Sensorelemente zugeordnet sind. Eine Auswertungseinrichtung ist zum Ermitteln von die mechanischen Belastungen mindestens eines Rotorblatts darstellenden Auswertungssignalen auf Grundlage der den diesem Rotorblatt zugeordneten Sensorelementen erzeugten Sensorsignalen ausgelegt. Eine die Auswertungssignale empfangende Regeleinrichtung kann mindestens einen Betriebsparameter der Windenergieanlage, etwa die Blattverstellung, in Abhängigkeit von den Auswertungssignalen einstellen.

Die US 2016/138571 A1 betrifft ein Verfahren zum Schätzen von Rotorblattlasten, das das Messen mehrerer Betriebsparameter der Windkraftanlage über einen oder mehrere Sensoren, das Schätzen von Kräften außerhalb der Ebene und von Kräften in der Ebene, die auf das Rotorblatt wirken, das Bestimmen eines Anwendungspunkts für die Kräfte außerhalb der Ebene und eines Anwendungspunkts für die Kräfte innerhalb der Ebene entlang einer Spannweite des Rotorblatts, das Schätzen von Momenten außerhalb der Ebene basierend auf den Kräften außerhalb der Ebene und den jeweiligen Anwendungspunkten, das Schätzen von Momenten in der Ebene des Rotorblatts basierend auf den Kräften in der Ebene und den jeweiligen Anwendungspunkten, und das Berechnen der auf das Rotorblatt wirkenden Last zumindest teilweise basierend auf den Momenten außerhalb der Ebene und innerhalb der Ebene umfasst.

Nach der US 2010/014969 A1 gleicht eine Windturbinen- oder Rotorlaststeuerung das Momentungleichgewicht in einer Windturbine aus, die einen Rotor mit mindestens zwei Schaufeln mit variabler Steigung enthält.

Es ist eine Aufgabe der Erfindung, die Messung von Biegemomenten in und/oder an Rotorblättern eines Rotors einer Windenergieanlage zu vereinfachen. Es ist insbesondere eine Aufgabe, den Aufwand zur Messung von Out-of-Plane-Momenten zu verringern.

Diese Aufgabe wird gelöst durch eine Vorrichtung und ein Verfahren zum Steuern einer Windenergieanlage gemäß den unabhängigen Ansprüchen. Vorteilhafte Ausgestaltungen sind Gegenstand der Unteransprüche.

Ein erster Aspekt der Erfindung betrifft eine Vorrichtung zum Steuern einer Windenergieanlage mit einem Rotor, der mindestens ein mittels einer Rotornabe mit einer Rotorachse des Rotors verbundenes Rotorblatt aufweist. Die Vorrichtung weist vorzugsweise eine Positionserfassungseinrichtung auf, die dazu eingerichtet ist, eine Drehstellung des Rotorblatts bezüglich der Rotorachse zu erfassen und Positionsdaten auszugeben, die einen Wert der Drehstellung charakterisieren. Ferner ist in bevorzugter Weise eine Sensoreinrichtung vorgesehen, die am und/oder im Rotorblatt angeordnet und dazu eingerichtet ist, ein auf das Rotorblatt senkrecht zu einer Rotorblattfläche und vorzugsweise senkrecht zu einer Sehnenfläche wirkendes Schlagmoment zu ermitteln und Sensordaten auszugeben, die einen Wert des ermittelten Schlagmoments charakterisieren, und eine Auswertungseinrichtung, die dazu eingerichtet ist, mittels der Positionsdaten einen Wert eines In-plane-Moments des Rotorblatts und aus dem ermittelten In-plane-Moment und den Sensordaten unter Berücksichtigung einer Wirkrichtung des ermittelten Schlagmoments relativ zur Sehnenfläche des Rotorblatts, insbesondere einer Richtung einer Messachse der Sensoreinrichtung, einen Wert eines Out-of-plane-Moments des Rotorblatts zu ermitteln. Eine Steuerungseinrichtung ist in bevorzugter Weise dazu eingerichtet, die Windenergieanlage auf Grundlage des ermittelten Werts des In-plane-Moments und/oder des ermittelten Werts des Out-of-plane-Moments zu steuern.

Eine Drehstellung des Rotorblatts bezüglich der Rotorachse im Sinne der Erfindung ist insbesondere ein Drehwinkel. Die Drehstellung kann insbesondere eine Ausrichtung des Rotorblatts in einer durch seine Drehbewegung definierten Rotorebene angeben. Vorzugsweise wird die Drehstellung, insbesondere der Drehwinkel, relativ zu einer vorgegebenen, beispielsweise vertikalen, Stellung des Rotorblatts angegeben.

Eine Positionserfassungseinrichtung im Sinne der Erfindung ist insbesondere eine Sensoranordnung mit wenigstens einem Positionssensor, der zum Erfassen der Lage des Rotorblatts bezüglich einer vordefinierten Stellung, insbesondere der oberen vertikalen Stellung, des Rotorblatts eingerichtet ist.

Ein Antriebsmoment im Sinne der Erfindung ist insbesondere ein Drehmoment oder eine Kraft, beispielsweise bedingt durch auf den Rotor einwirkenden Wind, das durch die Rotorachse, etwa den Antriebsstrang der Windenergieanlage, vermittelt wird.

Eine Antriebsmomenterfassungseinrichtung im Sinne der Erfindung ist insbesondere eine Sensoranordnung mit wenigstens einem Momentsensor, der zum sensorischen Erfassen des Antriebsmoments eingerichtet ist, oder eine Rechenanordnung, die zum rechnerischen Ermitteln oder Schätzen des Antriebsmoments, etwa basierend auf einer Winkelgeschwindigkeit und/oder einer elektrischen Leistung, oder eine Rechenanordnung, die zum rechnerischen Ermitteln oder Schätzen des Antriebsmoments basierend auf die Sollwertvorgabe des Umrichters eingerichtet ist.

Eine Sehnenfläche im Sinne der Erfindung ist insbesondere eine Querschnittsfläche des Rotorblatts, in welcher Rotorblattsehnen liegen, die sich von der Rotorblattvorderkante zur Rotorblatthinterkante erstrecken. Die Sehnenfläche erstreckt sich bevorzugt parallel entlang einer von einer Rotorblattwurzel bis zu einer Rotorblattspitze verlaufenden Rotorblattlängsachse und entlang von einer Rotorblattvorderkante bis zu einer Rotorblatthinterkante verlaufenden Rotorblattsehnen. Die Sehnenfläche weist damit in bevorzugter Weise eine Flächennormale auf, die senkrecht zur Rotorblattlängsachse liegt. Wenn die Rotorblätter eine Verwindung bzw. einen Twist aufweisen, ist die Sehnenfläche nicht eben, sondern eine dreidimensional verwundene Fläche. Die Flächennormale gilt in diesem Fall nur lokal für einen Profilschnitt.

Eine Auswertungseinrichtung im Sinne der Erfindung ist insbesondere eine Recheneinrichtung, die dazu eingerichtet ist, bereitgestellte Daten, insbesondere Positionsdaten, Antriebsmomentdaten und/oder Sensordaten, zu verarbeiten. Die Auswertungseinrichtung kann beispielsweise als integrierter Schaltkreis ausgebildet und dazu eingerichtet sein, in Abhängigkeit der bereitgestellten Daten Werte von Biegemomenten zu berechnen, die in oder aus ausgewählten Richtungen auf das Rotorblatt (ein-)wirken. Die Auswertungseinrichtung kann insbesondere dazu eingerichtet sein, die bereitgestellten Daten bzw. die durch die Daten charakterisierten ermittelten Biegemomente, insbesondere geometrisch und/oder in Abhängigkeit von der Wirkrichtung, zu transformieren, um Werte für ein In-plane-Moment bzw. Out-of-plane-Moment zu ermitteln.

Ein In-plane-Moment im Sinne der Erfindung ist insbesondere ein tangential zur vom Rotorblatt bei Bewegung des Rotorblatts überstrichenen Fläche und insbesondere senkrecht zur Rotorblattlängsachse auf das Rotorblatt wirkendes Biegemoment. Steht das Rotorblatt beispielsweise senkrecht auf der Rotorachse, ist das In-plane-Moment ein in der durch die Bewegung des Rotors definierten Rotorebene in der Bewegungsrichtung auf das Rotorblatt wirkendes Biegemoment.

Ein Out-of-plane-Moment im Sinne der Erfindung ist insbesondere ein senkrecht zur vom Rotorblatt bei Bewegung des Rotorblatts überstrichenen Fläche auf das Rotorblatt und insbesondere senkrecht zur Rotorblattlängsachse wirkendes Biegemoment. Steht das Rotorblatt beispielsweise senkrecht auf der Rotorachse, ist das Out-of-plane-Moment ein senkrecht zur durch die Bewegung des Rotors definierten Rotorebene auf das Rotorblatt wirkendes Biegemoment.

Eine Wirkrichtung im Sinne der Erfindung ist insbesondere eine Richtung, aus der ein ermitteltes Biegemoment auf das Rotorblatt einwirkt. Die Wirkrichtung liegt dabei vorzugsweise senkrecht zur Rotorblattlängsachse. Die Wirkrichtung ist insbesondere definiert durch die Richtung mindestens einer Messachse der Sensoreinrichtung, die beispielsweise vorgibt, in welcher Richtung eine Biegung des Rotorblatts erfasst wird.

Eine Steuerung der Windenergieanlage ist insbesondere eine Regelung von Betriebsparametern der Windenergieanlage im Betrieb derselben. Eine Steuerung kann beispielsweise ein Abschalten der Windenergieanlage, eine azimutale Ausrichtung einer Gondel der Windenergieanlage und/oder dergleichen sein. Insbesondere kann eine Steuerung der Windenergieanlage das Einstellen eines Einstellwinkels oder das Einstellen eines Generatormomentes und damit der Leistungsabgabe sein.

Ein Einstellwinkel im Sinne der Erfindung ist insbesondere ein Winkel zwischen einem Rotorblatt und einer von der Rotorblattlängsachse beim Drehen des Rotors überstrichenen Rotorebene, die bevorzugt senkrecht zur Rotorachse liegt oder bei Rotoren mit Konuswinkel eine Kegelmantelfläche darstellt. Vorzugsweise ist der Einstellwinkel dann als 0° definiert, wenn das Rotorblatt in Betriebsstellung ist, d.h. im Betrieb mit optimaler Schnelllaufzahl die maximale Leistung an der Rotorwelle liefert. Der Einstellwinkel kann alternativ oder zusätzlich aber auch als Winkel zwischen einer Rotorblattsehne, welche vorzugsweise zumindest im Wesentlichen von einer Rotorblattvorderkante zu einer Rotorblatthinterkante verläuft, an einem definierten Profilschnitt des Rotorblatts und der oben genannten Rotorebene oder Kegelmantelfläche definiert sein.

Das Schlagmoment im Sinne der Erfindung ist vorzugsweise dann identisch mit dem Out-of-plane-Moment, wenn der Einstellwinkel des Rotorblatts 0° beträgt.

Zum Einstellen eines Einstellwinkels kann das Rotorblatt vorzugsweise um eine Rotorblattlängsachse gedreht werden, etwa um das Rotorblatt bezüglich des das Rotorblatt anströmenden, insbesondere scheinbaren, Winds auszurichten. Die Erfindung basiert insbesondere auf dem Ansatz, die Messung von Biegemomenten in und/oder an Rotorblättern eines Rotors einer Windenergieanlage dadurch zu vereinfachen, dass die Anzahl der zur Bestimmung der Biegemomente eingesetzten Sensoren verringert wird. Für gewöhnlich geht mit der Reduzierung der Anzahl von in oder an einem Rotorblatt angeordneten Sensoren zur Erfassung von auf das Rotorblatt wirkenden Biegemomenten ein vom Einstellwinkel der Rotorblätter abhängiger Messfehler einher, da mit zunehmendem Einstellwinkel die verbleibende(n) Messachse(n) zunehmend parallel zur von der bei Bewegung des Rotorblatts überstrichenen Fläche, insbesondere der Rotorebene, ausgerichtet werden. Bei einer zunehmend parallelen Ausrichtung der Messachse zur Rotorebene wird beispielsweise der Anteil von gemessenen, senkrecht zur Rotorebene auftretenden Kräften verringert, während der Anteil von gemessenen, in der Rotorebene auftretenden Kräften erhöht wird. Entsprechend wird bei einer zunehmend senkrechten Ausrichtung der Messachse zur Rotorebene beispielsweise der Anteil von gemessenen, in der Rotorebene auftretenden Kräften verringert, während der Anteil von gemessenen, senkrecht zur Rotorebene auftretenden Kräften erhöht wird.

Zur Kompensation dieses Effekts wird vorzugsweise ein tangential zur von der bei der Bewegung des Rotorblatts überstrichenen Fläche, insbesondere der Rotorebene, auf das Rotorblatt wirkendes Biegemoment, d.h. ein sog. In-plane-Moment, aus anderweitig erhaltener Information ermittelt. Beispielsweise kann das In-plane-Moment aus anderen sensorisch erfassten Größen, welche den Betrieb der Windenergieanlage kennzeichnen, ermittelt bzw. abgeleitet werden. Insbesondere kann aus einer Drehstellung des Rotorblatts, von der beispielsweise eine Belastung des Rotorblatts durch sein Eigengewicht abhängt, das In-plane-Moment abgeleitet werden.

Das In-plane-Moment liefert dann bei der Verrechnung mit den Sensordaten der verbleibenden Sensoren vorzugsweise ein senkrecht zur bei der Bewegung des Rotorblatts überstrichenen Fläche wirkendes Biegemoment, d. h. ein sog. Out-of-plane-Moment. Dabei werden in bevorzugter Weise geometrische Relationen zwischen ermitteltem In-plane-Moment und dem durch die Sensordaten charakterisierten Schlagmoment ausgenutzt, um das Out-of-plane-Moment zu berechnen. Insbesondere kann das mittels einer Sensoreinrichtung erfasste Schlagmoment in Abhängigkeit des ermittelten In-plane-Moments geometrisch transformiert werden, um das Out-of-plane-Moment zu erhalten. Dabei geht in die Transformation in bevorzugter Weise die Wirkrichtung des erfassten Schlagmoments relativ zu einer Sehnenfläche des Rotorblatts ein.

Dadurch ist es möglich, das Out-of-plane-Moment zu ermitteln, auch wenn die Sensoreinrichtung beispielsweise nur ein senkrecht zur Sehnenfläche wirkendes Schlagmoment erfassen kann und die Sehnenfläche um eine Rotorblattlängsachse verdreht ist, d.h. die Sehnenfläche nicht parallel zur Rotorebene ausgerichtet ist und daher die verbleibende Messachse der Sensoreinrichtung nicht parallel zum wirkenden Out-of-plane-Moment liegt.

Insbesondere kann dadurch die Windenergieanlage auch mit einer reduzierten Anzahl von Sensoren, insbesondere mit einer Sensoreinrichtung, die ausschließlich ein senkrecht zur Sehnenfläche wirkendes Schlagmoment erfassen kann, zuverlässig und präzise gesteuert werden. Neben einer Kostenersparnis ermöglicht dies vorteilhaft auch eine vereinfachte Systemarchitektur, was mit einer verringerten Fehleranfälligkeit einhergeht. Da erfindungsgemäß in vorteilhafter Weise trotz der reduzierten Anzahl an Sensoren, d.h. bei nur einer Biegemomentmessung pro Rotorblatt, zumindest im Wesentlichen die gleiche Messgenauigkeit erreicht werden kann wie bei Messungen mit mehreren Sensoren, ist das erfindungsgemäße Steuern der Windenergieanlage, insbesondere ein Einstellen des Einstellwinkels des Rotorblatts, bei nur einer Biegemomentmessung pro Rotorblatt effizienter.

Insgesamt erlaubt die Erfindung eine vereinfachte Messung von auf Rotorblätter eines Rotors einer Windenergieanlage wirkenden Biegemomenten. Insbesondere erlaubt die Erfindung eine Reduzierung des Aufwands zur Ermittlung von Out-of-Plane-Momenten.

In einer bevorzugten Ausführungsform weist die Vorrichtung des Weiteren eine Antriebsmomenterfassungseinrichtung auf, die dazu eingerichtet ist, ein auf die Rotorachse wirkendes Antriebsmoment zu erfassen und Antriebsmomentdaten auszugeben, die einen Wert des Antriebsmoments charakterisieren. Dabei wird das In-plane-Moment vorzugsweise des Weiteren mittels der Antriebsmomentdaten ermittelt. Das In-plane-Moment kann insbesondere unter Berücksichtigung eines Antriebsmoments, das beispielsweise durch das Rotorblatt über die Rotornabe auf die Rotorachse ausgeübt wird, ermittelt werden. Das In-plane-Moment kann so besonders präzise ermittelt werden.

In einer weiteren bevorzugten Ausführungsform ist die Auswertungseinrichtung dazu eingerichtet, auf Grundlage des ermittelten Werts des In-plane-Moments und/oder des ermittelten Wert des Out-of-plane-Moments eine Umweltbedingung zu ermitteln. Zudem ist die Steuerungseinrichtung vorzugsweise dazu eingerichtet, die Windenergieanlage auf Grundlage der ermittelten Umweltbedingung zu steuern.

Eine Umweltbedingung im Sinne der Erfindung ist insbesondere ein externer Einfluss auf die Windenergieanlage bzw. den Rotor, insbesondere auf das Rotorblatt. Eine Umweltbedingung kann beispielsweise eine Windgeschwindigkeit, eine Windrichtung, eine Luftdichte und/oder dergleichen sein. Dadurch kann beispielsweise der Einstellwinkel eines Rotorblattes besonders günstig eingestellt werden oder eine Gondel der Windenergieanlage und damit die Rotorachse besonders günstig zur gegenwärtig herrschenden Windrichtung ausgerichtet werden.

In einer weiteren bevorzugten Ausführungsform ist die Steuerungseinrichtung dazu eingerichtet, auf Grundlage des ermittelten Werts des Out-of-plane-Moments einen Einstellwinkel des Rotorblatts einzustellen. Vorzugsweise ist die Steuerungseinrichtung dabei als Blattverstelleinrichtung ausgebildet.

Eine Blattverstelleinrichtung im Sinne der Erfindung ist insbesondere ein Mechanismus zur Ausrichtung des Rotorblatts, vorzugsweise durch Drehung um eine Rotorblattlängsachse. Die Blattverstelleinrichtung ist bevorzugt dazu eingerichtet, den Einstellwinkel des Rotorblatts derart einzustellen, dass ein oder mehrere, von dem ermittelten In-plane-Moment und/oder dem ermittelten Out-of-plane-Moment abhängige Kriterien erfüllt sind. Beispielsweise kann die Blattverstelleinrichtung dazu eingerichtet sein, den Einstellwinkel so einzustellen, dass das ermittelte In-plane-Moment und/oder Out-of-plane-Moment einen vorgegebenen Schwellenwert nicht erreicht oder überschreitet oder dass alle Rotorblätter möglichst gleichmäßig belastet werden, wodurch Nick- und Giermomente reduziert werden.

Somit kann der Einstellwinkel beispielsweise geändert werden, um eine mechanische Belastung des Rotorblatts durch den das Rotorblatt antreibenden Winds unterhalb eines vorgegebenen Belastungsschwellenwerts zu halten. Dies kann bezüglich der Lebensdauer von Komponenten der Windenergieanlage besonders günstig sein.

In einer weiteren bevorzugten Ausführungsform weist die Sensoreinrichtung ausschließlich eine Messachse auf, insbesondere zwei im Bereich einer Rotorblattwurzel auf der Sehnenfläche nebeneinander oder auf einander gegenüberliegenden Seiten der Sehnenfläche angeordnete Sensorelemente. Die zwei Sensorelemente sind dabei vorzugsweise dazu eingerichtet, eine Biegung des Rotorblatts senkrecht zur Rotorblattlängsachse zu erfassen. Sind die zwei Sensorelemente in bevorzugter Weise an einer Oberseite bzw. einer Unterseite des Rotorblatts angeordnet, können die zwei Sensorelemente eine Biegung der Sehnenfläche zuverlässig erfassen. Aus der sensorisch erfassten Biegung der Sehnenfläche an zwei benachbart oder bezüglich der Sehnenfläche einander gegenüberliegenden Punkten kann das senkrecht zur Sehnenfläche auf das Rotorblatt einwirkende Schlagmoment ermittelt werden. Gemäß der Erfindung reicht das Vorsehen von zwei Sensorelementen im Bereich der Rotorblattwurzel damit aus, um unter Berücksichtigung eines separat ermittelten In-plane-Moments das Out-of-plane-Moment präzise und zuverlässig zu ermitteln.

In einer weiteren bevorzugten Ausführungsform sind die Sensorelemente als optische Dehnungsmessstreifen ausgebildet. Dadurch kann eine Biegung des Rotorblatts senkrecht zur Rotorblattlängsachse, insbesondere entweder eine Biegung der Sehnenfläche oder eine Biegung in der Sehnenfläche, zuverlässig und präzise erfasst werden. Zudem sind derart ausgebildete Sensorelemente robust gegenüber durch externe Einwirkungen, etwa Blitzschlag, bedingten Ausfällen.

In einer weiteren bevorzugten Ausführungsform sind die Sensorelemente als Stabsensoren ausgebildet. Stabsensoren sind Sensoren, bei denen im Bereich der Blattwurzel ein stabförmiges Bauteil an einem Ende fest mit der Blattwandung und im Wesentlichen parallel zu dieser befestigt ist, wobei die Bewegung des anderen Endes des Stabes relativ zur Blattwandung von einem Sensor erfasst wird. Bei einer belastungsbedingten Verformung des Rotorblattes sind so schon mit Stablängen von nur 50 bis 100 cm sowohl ausreichend große Querbewegungen (Winkelverformung) als auch Längsbewegungen des Stabendes gegenüber der Blattwandung detektierbar. Der Stab wird bevorzugt aus einem ähnlichen Material wie die Blattwandung hergestellt, um Temperatureffekte durch Materialdehnung zu kompensieren. Ein derartiger Stabsensor ist grundsätzlich bekannt und wird beispielsweise in der DE 198 47 982 C2 offenbart.

In einer weiteren bevorzugten Ausführungsform ist die Auswertungseinrichtung dazu eingerichtet, auf Grundlage der Antriebsmomentdaten ein individuelles Blattantriebsmoment zu ermitteln, welches auf das Rotorblatt wirkt. Vorzugsweise ist die Auswertungseinrichtung dazu eingerichtet, das erfasste Antriebsmoment mindestens zwei Rotorblättern des Rotors gemäß einer, insbesondere gleichmäßigen, Verteilung zuzuordnen. Bei der Ermittlung des In-plane-Moments gewichtet die Auswertungseinrichtung die Antriebsmomentdaten, insbesondere den Wert des Antriebsmoments, in bevorzugter Weise mit einem Faktor, welcher der Anzahl der Rotorblätter des Rotors Rechnung trägt. Bei einem Rotor mit drei Rotorblättern kann der Wert des Antriebsmoments zur Berechnung des In-plane-Moments beispielsweise mit dem Faktor 1/3 gewichtet werden. Die Berücksichtigung eines individuellen Blattantriebsmoments ermöglicht eine besonders große Präzision bei der Ermittlung des In-plane-Moments.

In einer weiteren bevorzugten Ausführungsform ist die Auswertungseinrichtung dazu eingerichtet, das individuelle Blattantriebsmoment unter Berücksichtigung mindestens eines der folgenden Parameter zu ermitteln: (i) Positionsdaten, beispielsweise einen Drehwinkel des Rotorblatts und/oder anderer Rotorblätter des Rotors; (ii) Windenergieanlagenkenngrößen, beispielsweise eine azimutale Ausrichtung der Rotorachse, insbesondere relativ zur Windrichtung; (iii) Umweltbedingung, beispielsweise eine Windgeschwindigkeit, Windrichtung und/oder (iv) weiteren Sensordaten, die von mindestens einer weiteren, an und/oder in einem weiteren Rotorblatt angeordneten Sensoreinrichtung ausgegeben werden. Vorzugsweise ist die Auswertungseinrichtung dazu eingerichtet, das individuelle Blattantriebsmoment durch eine Verteilungsfunktion, in welche das erfasste Antriebsmoment und gegebenenfalls eine der vorstehend genannten Größen eingeht, zu ermitteln. Das individuelle Blattantriebsmoment kann beispielsweise unter Berücksichtigung eines Höhenwindgradienten, einer horizontalen Schräganströmung, einer vertikalen Schräganströmung und/oder einem Verhältnis von erfassten, senkrecht zur Sehnenfläche wirkenden Schlagmomenten verschiedener Rotorblätter ermittelt werden. Dies erlaubt eine dynamische Bestimmung des auf das Rotorblatt wirkenden In-plane-Moments und erhöht damit vorteilhaft die Präzision und Zuverlässigkeit des im Folgenden ermittelten Out-of-plane-Moments.

Eine Windenergieanlagenkenngröße im Sinne der Erfindung ist insbesondere eine die Windenergieanlage, insbesondere das Rotorblatt, kennzeichnende Größe. Eine Windenergieanlagenkenngröße kann, neben einer azimutalen Ausrichtung, beispielsweise auch eine Höhe des Rotors, d.h. der Abstand der Rotornabe vom Boden, eine Länge des Rotorblatts und/oder dergleichen sein. Unter Berücksichtigung von Mess- und/oder Schätzwerten etwa einer Windgeschwindigkeit und/oder einer Windrichtung kann somit etwa der Höhenwindgradient, die Anströmung des Rotorblatts und/oder der Rotorblätter und/oder dergleichen ermittelt, insbesondere geschätzt, werden.

In einer weiteren bevorzugten Ausführungsform ist die Antriebsmomenterfassungseinrichtung dazu eingerichtet, mindestens einen Betriebsparameter, beispielsweise eine Drehzahl, eine elektrische Leistung, einen Umrichterkennwert, eine Belastung des Triebstrangs, ein Gesamtdrehmoment und/oder dergleichen, der Windenergieanlage zu schätzen und/oder zu erfassen und das Antriebsmoment auf Grundlage des mindestens einen geschätzten und/oder erfassten Betriebsparameters zu ermitteln. Die Antriebsmomenterfassungseinrichtung weist in bevorzugter Weise eine Sensoranordnung auf, die dazu eingerichtet ist, den oder die Betriebsparameter sensorisch zu erfassen. Alternativ oder zusätzlich weist die Antriebsmomenterfassungseinrichtung eine Rechenanordnung auf, die dazu eingerichtet ist, den oder die Betriebsparameter rechnerisch zu ermitteln oder zu schätzen. Dadurch kann das In-plane-Moment besonders einfach und zuverlässig ermittelt werden.

In einer weiteren bevorzugten Ausführungsform ist die Auswertungseinrichtung dazu eingerichtet, die Sensordaten, insbesondere geometrisch, derart zu transformieren, dass die Sensordaten einen Anteil des erfassten Schlagmoments am Out-of-plane-Moment charakterisieren. Der durch die Transformation erhaltene Anteil des erfassten Schlagmoments am Out-of-plane-Moment kann auch als Näherungswert für das Out-of-plane-Moment aufgefasst werden, insbesondere für kleine Anstellwinkel.

Dabei ist die Auswertungseinrichtung vorzugsweise dazu eingerichtet, die Sensordaten in Abhängigkeit eines Einstellwinkels des Rotorblatts zu transformieren. Alternativ oder zusätzlich kann die Auswertungseinrichtung aber auch dazu eingerichtet sein, die Sensordaten in Abhängigkeit eines Winkels zwischen der Wirkrichtung des erfassten Schlagmoments und der Sehnenfläche des Rotorblatts zu transformieren. Beispielsweise kann ein durch die Sensordaten charakterisierter Wert des Schlagmoments, das senkrecht zur Sehnenfläche wirkt, mit dem Kosinus des Einstellwinkels multipliziert werden, um zumindest einen Anteil des Out-of-plane-Moments zu erhalten. Weitere Anteile am Out-of-plane-Moment ermittelt die Auswertungseinrichtung vorzugsweise durch, insbesondere geometrische, Transformation des zuvor unter Berücksichtigung zumindest der Positionsdaten ermittelten In-plane-Moments, vorzugsweise in Abhängigkeit des Anströmwinkels und des Schlagmoments. Die derartige Berechnung des Out-of-plane-Moments kann effizient, d. h. auch mit geringer Rechenleistung, schnell und zuverlässig ausgeführt werden.

Die durch die, insbesondere geometrischen, Transformationen erhaltenen Anteile am Out-of-plane-Moment sind vorzugsweise als Beträge zu verstehen, die mit entsprechenden Vorzeichen miteinander verrechnet werden müssen, um das tatsächlich wirkende Out-of-plane-Moment zu erhalten. Insbesondere werden hierbei Momentkomponenten berücksichtigt, welche zum In-plane-Moment beitragen, aber auch einen Anteil in Richtung des Out-of-plane-Moments aufweisen. Mithin kann auch ein durch das Schwenkmoment bedingter Anteil am Out-of-plane-Moment berücksichtigt werden. Mit anderen Worten können die Anteile am Out-of-plane-Moment, welches aus dem Schlagmoment und dem Schwenkmoment gebildet wird, auch aus dem Schlagmoment und dem In-plane-Moment durch entsprechende Transformationen ermittelt werden.

In einer weiteren bevorzugten Ausführungsform ist die Auswertungseinrichtung dazu eingerichtet, für jedes der Rotorblätter des Rotors ein Wert des Out-of-plane-Moments zu ermitteln, insbesondere auf Grundlage von Sensordaten, die von jeweils an den verschiedenen Rotorblättern angeordneten Sensoreinrichtungen erzeugt werden, und Werten des In-plane-Moments, die unter Berücksichtigung von Positionsdaten für jedes der Rotorblätter ermittelt werden. Vorzugsweise wird auf Grundlage des für jedes der Rotorblätter ermittelten Werte des Out-of-plane-Moments ein Giermoment und/oder ein Nickmoment des Rotors ermittelt. Insbesondere kann das Nick- und/oder Giermoment mittels einer Vektoraddition der Out-of-plane-Momente aller Rotorblätter berechnet werden. Vorzugsweise ist die Blattverstelleinrichtung dabei dazu eingerichtet, den Einstellwinkel des Rotorblatts auf Grundlage des ermittelten Giermoments und/oder Nickmoments einzustellen. Insbesondere kann die Auswertungseinrichtung dazu eingerichtet sein, anhand des ermittelten Giermoments und/oder Nickmoments einen Regelfehler zu berechnen, auf dessen Grundlage die Windenergieanlage gesteuert, insbesondere der Einstellwinkel eingestellt, wird. Beispielsweise kann die Auswertungseinrichtung auf Grundlage des Schwenk- und Out-of-plane-Moments berechnen, wie stark ein auf den Rotor wirkendes Giermoment, welches eine Azimutnachführungseinrichtung zur azimutalen Ausrichtung des Rotors belastet, ist.

Um dieses Giermoment auszugleichen oder zumindest zu reduzieren, kann beispielsweise mittels der Blattverstelleinrichtung der Einstellwinkel der Rotorblätter zyklisch über den Rotorumlauf korrigiert werden. Dies erlaubt einen zuverlässigen Betrieb der Windenergieanlage und eine Verlängerung der Lebensdauer.

In einer weiteren bevorzugten Ausführungsform ist die Auswertungseinrichtung dazu eingerichtet, den Wert des auf das Rotorblatt wirkenden In-plane-Moments und/oder Out-of-plane-Moments zusätzlich unter Berücksichtigung eines Kippwinkels (auch Tiltwinkel genannt) der Rotorachse bezüglich des Horizonts und/oder eines Ausrichtungswinkels des Rotorblatts bezüglich einer senkrecht zur Rotorachse liegenden Rotorebene (auch Konuswinkel genannt) zu ermitteln. Vorzugsweise ist die Auswertungseinrichtung dabei dazu eingerichtet, durch eine Korrekturrechnung den sich kontinuierlich ändernden Einfluss des Eigengewichts des Rotorblatts auf das In-plane-Moment zu kompensieren. Insbesondere kann die Auswertungseinrichtung mittels, bevorzugt geometrischer, Transformationen der gemessenen oder berechneten Rotorblattposition bzw. Antriebsmoment die Anteile des Eigengewichts des Rotorblatts am In-plane-Moment berücksichtigen. Vorzugsweise kann auf Grundlage des derart korrigierten In-plane-Moments anschließend auch ein korrigiertes Out-of-plane-Moment ermittelt werden. Dies ermöglicht eine besonders effektive Steuerung der Wind-

EP 3 553 311 B1

energieanlage, insbesondere ein besonders effektives Einstellen des Anströmwinkels.

In einer weiteren bevorzugten Ausführungsform ist die Auswertungseinrichtung dazu eingerichtet, den Wert des auf den Turm wirkenden Rotorschubs aus den Out-of-plane-Momenten der einzelnen Blätter zu ermitteln. Dies erfolgt bevorzugt unter Berücksichtigung des Tiltwinkels und eines eventuellen Konuswinkels. Dies ermöglicht die Kenntnis der Hauptbelastung auf den Turm, welche dann durch eine Steuerung begrenzt werden kann, so dass der Turm als sehr teure Einzelkomponente vor Überlastung geschützt werden kann.

Ein zweiter Aspekt der Erfindung betrifft ein Verfahren zum Steuern einer Windenergieanlage mit einem Rotor, der mindestens ein mittels einer Rotornabe mit einer Rotorachse des Rotors verbundenes Rotorblatt aufweist. Das Verfahren weist vorzugsweise die folgenden Schritte auf: (i) Erfassen einer Drehstellung des Rotorblatts bezüglich der Rotorachse und Ausgeben von Positionsdaten, die einen Wert der Drehstellung charakterisieren; (ii) Ermitteln eines auf das Rotorblatt senkrecht zu einer Rotorblattlängsachse und vorzugsweise senkrecht zu einer Sehnenfläche des Rotorblatts wirkenden Schlagmoments und Ausgeben von Sensordaten, die einen Wert des erfassten Schlagmoments charakterisieren; (iii) Ermitteln eines Werts eines In-plane-Moments des Rotorblatts mittels der Positionsdaten und Ermitteln eines Werts eines Out-of-plane-Moments des Rotorblatts aus dem ermittelten In-plane-Moment und den Sensordaten unter Berücksichtigung einer Wirkrichtung des ermittelten Schlagmoments relativ zur Sehnenfläche des Rotorblatts, insbesondere einer Richtung einer Messachse der Sensoreinrichtung; und (iv) Steuern der Windenergieanlage auf Grundlage des ermittelten Werts des In-plane-Moments und/oder des ermittelten Werts des Out-of-plane-Moments.

In einer bevorzugten Ausführungsform weist das Verfahren des Weiteren den folgenden Schritt auf: Erfassen eines auf die Rotorachse wirkenden Antriebsmoments und Ausgeben von Antriebsmomentdaten, die einen Wert des Antriebsmoments charakterisieren. Dabei wird vorzugsweise das In-plane-Moment des Weiteren mittels der Antriebsmomentdaten ermittelt.

In einer weiteren bevorzugten Ausführungsform wird auf Grundlage des ermittelten Werts des In-plane-Moments und/oder des ermittelten Wert des Out-of-plane-Moments eine Umweltbedingung ermittelt und die Windenergieanlage auf Grundlage der ermittelten Umweltbedingung gesteuert. Dadurch kann beispielsweise der Einstellwinkel eines Rotorblattes besonders günstig eingestellt werden oder eine Gondel der Windenergieanlage und damit die Rotorachse besonders günstig zur gegenwärtig herrschenden Windrichtung ausgerichtet werden.

In einer weiteren bevorzugten Ausführungsform wird auf Grundlage des ermittelten Werts des Out-of-plane-Moments ein Einstellwinkel des Rotorblatts eingestellt. Somit kann der Einstellwinkel beispielsweise geändert werden, um eine mechanische Belastung des Rotorblatts durch den das Rotorblatt antreibenden Winds unterhalb eines vorgegebenen Belastungsschwellenwerts zu halten. Dies kann bezüglich der Lebensdauer von Komponenten der Windenergieanlage besonders günstig sein.

Die in Bezug auf den ersten Aspekt der Erfindung und dessen vorteilhafte Ausgestaltung beschriebenen Merkmale und Vorteile gelten, zumindest wo technisch sinnvoll, auch für den zweiten, dritten und vierten Aspekt der Erfindung und dessen vorteilhafte Ausgestaltung sowie umgekehrt.

Die Erfindung wird im Folgenden anhand von nicht einschränkenden Ausführungsbeispielen, die in den Figuren dargestellt sind, näher erläutert. Darin zeigen wenigstens teilweise schematisch:

**Fig. 1** ein erstes bevorzugtes Ausführungsbeispiel einer Windenergieanlage;

**Fig. 2** ein bevorzugtes Ausführungsbeispiel eines Rotors;

**Fig. 3** ein bevorzugtes Ausführungsbeispiel eines Rotorblatts;

**Fig. 4** ein zweites bevorzugtes Ausführungsbeispiel einer Windenergieanlage; und

**Fig. 5** ein bevorzugtes Ausführungsbeispiel eines erfindungsgemäßen Verfahrens.

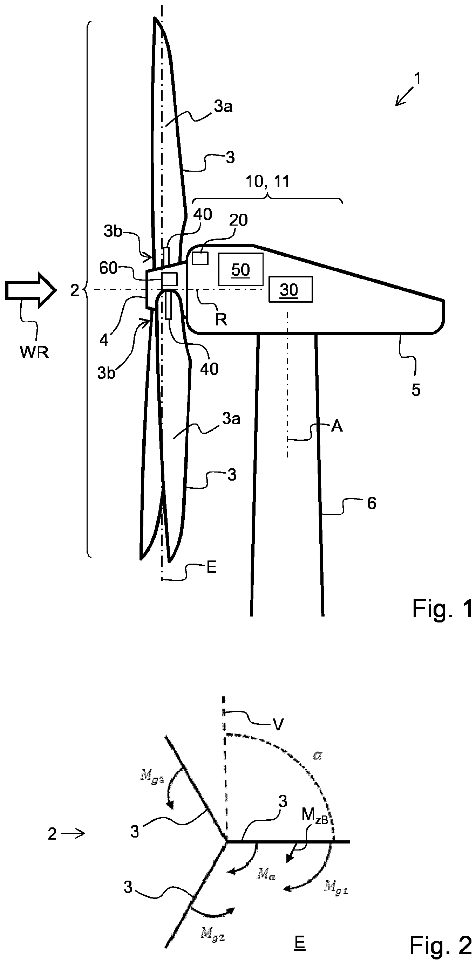

**Figur 1** zeigt ein bevorzugtes Ausführungsbeispiel einer Windenergieanlage 1 mit einem Rotor 2, der drei Rotorblätter 3 aufweist, welche über eine Rotornabe 4 um eine Rotorachse R drehbar gelagert sind, und einer Vorrichtung 10 zum Einstellen eines Einstellwinkels jedes der Rotorblätter 3. Die Rotornabe 4 des Rotors 2 ist an einer Gondel 5 der Windenergieanlage 1 montiert, welche vorzugsweise drehbar um eine vertikale Drehachse A auf einem Turm 6 gelagert ist, so dass die Gondel 5 bzw. die Rotorachse R azimutal bezüglich einer Windrichtung WR ausgerichtet werden kann. Die Darstellung in Fig. 1 ist eine vereinfachte Darstellung ohne Berücksichtigung eines Tiltwinkels der Rotorachse und/oder eines Konuswinkels der Rotorblätter 3 in Bezug auf die Rotorachse R.

Um die von der Windenergieanlage 1 über den Rotor 2 aufgenommene Leistung regulieren zu können, weist die Windenergieanlage 1 beispielsweise eine als Blattverstelleinrichtung ausgebildete Steuerungseinrichtung 60 auf, die dazu eingerichtet ist, die Einstellwinkel der Rotorblätter 3 bezüglich einer Rotorebene E, die durch die Bewegung der Rotorblätter 3 definiert ist, einzustellen. Insbesondere ist die Steuerungseinrichtung 60 in bevorzugter Weise dazu eingerichtet, den Einstellwinkel zumindest eines Rotorblatts 3 auf Grundlage eines ermittelten In-plane-Moments, das auf das Rotorblatt 3 wirkt, und/oder eines ermittelten Out-of-plane-Moments, das auf das Rotorblatt 3 wirkt, einzustellen. Das In-plane- und Out-of-plane-Moment bezieht sich dabei im gezeigten Beispiel auf ein auf das Rotorblatt 3 in der Rotorebene E bzw. senkrecht zur Rotorebene E wirkendes Biegemoment. Das In-plane- und Out-of-plane-Moment kann dabei mithilfe der Vorrichtung 10 wie folgt ermittelt werden:

Die Vorrichtung 10 weist vorzugsweise eine Positionserfassungseinrichtung 20 auf, die dazu eingerichtet ist, eine Drehstellung des Rotorblatts 3 bezüglich der Rotorachse R zu erfassen und Positionsdaten auszugeben, die einen Wert der Drehstellung charakterisieren, sowie eine Antriebsmomenterfassungseinrichtung 30, die dazu eingerichtet ist, ein auf die Rotorachse R wirkendes Antriebsmoment zu erfassen und Antriebsmomentdaten auszugeben, die einen Wert des Antriebsmoments charakterisieren. Die Vorrichtung 10 weist darüber hinaus in bevorzugter Weise eine Sensoreinrichtung 40 auf, die am und/oder im Rotorblatt 3, insbesondere im Bereich einer Rotorblattwurzel 3b, angeordnet und dazu eingerichtet ist, ein auf das Rotorblatt 3 senkrecht zu einer Rotorblattlängsachse wirkendes Schlagmoment zu ermitteln und Sensordaten auszugeben, die einen Wert des ermittelten Schlagmoments charakterisieren, sowie eine Auswertungseinrichtung 50, die dazu eingerichtet ist, aus den Positionsdaten und den Antriebsmomentdaten einen Wert des In-plane-Moments und des Weiteren aus dem ermittelten In-plane-Moment und den Sensordaten unter Berücksichtigung einer Wirkrichtung des ermittelten Schlagmoments relativ zu einer Sehnenfläche des Rotorblatts 3 einen Wert des Out-of-plane-Moments zu ermitteln und die ermittelten Werte, beispielsweise an die als Blattverstelleinrichtung ausgebildete Steuerungseinrichtung 60, auszugeben.

Alternativ oder zusätzlich kann die Auswertungseinrichtung 50 auch dazu eingerichtet sein, die ermittelten Werte des In-plane-Moments und des Out-of-plane-Moments zum Ermitteln einer Umweltbedingung, welche einen externen Einfluss auf die Windenergieanlage 1, insbesondere auf den Rotor 2 bzw. die Rotorblätter 3, kennzeichnet, zu nutzen. Die ermittelte Umweltbedingung kann dann an die Steuerungseinrichtung 60 zur Steuerung der Windenergieanlage 1, beispielsweise zum Ausrichten der Gondel 5 relativ zur Windrichtung WR oder zum Abschalten der Windenergieanlage 1 bei zu hohen Windgeschwindigkeiten, ausgegeben werden.

**Figur 2** zeigt ein Ausführungsbeispiel eines Rotors 2 mit drei Rotorblättern 3, wobei der Rotor 2 um eine senkrecht in der Figurenebene stehende Rotorachse drehbar gelagert ist. Die Bewegung der Rotorblätter 3 definiert eine Rotorebene E, die in der gezeigten Darstellung der Figurenebene entspricht. Auf jedes der Rotorblätter 3 wirkt im Betrieb, d.h. bei einer durch den Wind verursachten Rotation des Rotors 2, ein Biegemoment $M_{zB}$ in der Rotorebene E, welches auch als In-plane-Moment bezeichnet wird.

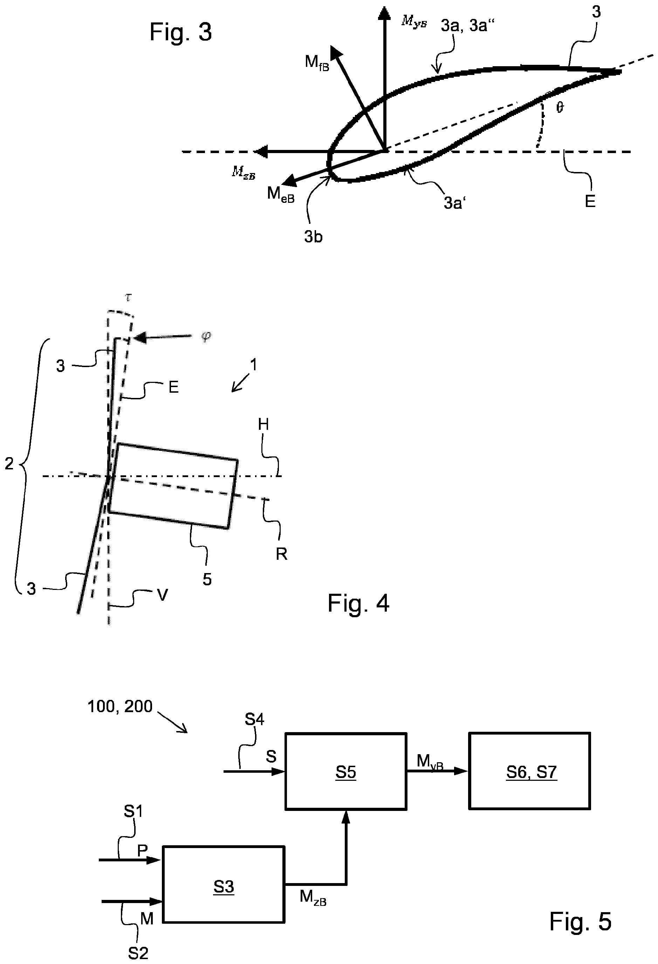

Das In-plane-Moment $M_{zB}$ setzt sich vorzugsweise aus mindestens zwei Anteilen zusammen: einem Antriebsmoment $M_a$ und einem von der Drehstellung des jeweiligen Rotorblatts 3 abhängigen, durch das Eigengewicht des Rotorblatts 3 generierten Biegemoment $M_{gi}$, wobei der Index i das jeweilige Rotorblatt angibt. Liegt ein Tiltwinkel der Rotorachse und/oder ein Konuswinkel der Rotorblätter in Bezug auf die Rotorachse vor, so sind auch die daraus resultierenden Momente bei der Bestimmung des In-plane-Moments $M_{zB}$ zu berücksichtigen, wie weiter unten in Bezug auf Fig. 4 beschrieben ist.

Das Antriebsmoment $M_a$ kann etwa eine Torsionsbelastung eines mit dem Rotor 2 verbundenen Triebstrangs abbilden, die multipliziert mit der Drehzahl (Winkelgeschwindigkeit) letztendlich die Nutzleistung darstellt. Die einzelnen Rotorblätter 3 wirken aufgrund der zumindest im Wesentlichen starren Verbindung der drei Rotorblätter 3 über eine Rotornabe auf den mit dem Rotor 2 verbundenen Triebstrang. Das Antriebsmoment $M_a$ ergibt sich mithin aus der Vektorsumme der In-plane-Momente $M_{zB}$ der einzelnen Rotorblätter 3.

Wird das Antriebsmoment $M_a$ erfasst, kann es, beispielsweise gemäß einer Verteilungsfunktion, gegebenenfalls unter Berücksichtigung von Umweltbedingungen, Windenergieanlagenkenngrößen und/oder dergleichen, alternativ jedoch auch gleichmäßig, auf die einzelnen Rotorblätter 3 verteilt werden. Vorzugsweise wird angenommen, dass auf jedes einzelne der drei Rotorblätter 3 ein individuelles Blattantriebsmoment $1/3 \cdot M_a$ wirkt.

Das durch das Eigengewicht des Rotorblatts 3 generierte Biegemoment $M_{gi}$ ist insbesondere abhängig vom Drehwinkel $\alpha$ zwischen einer oberen Vertikalen V und der gegenwärtigen Ausrichtung des Rotorblatts 3. Beträgt der Drehwinkel $\alpha$ eines Rotorblatts 3 z.B. 0°, d.h. ist das entsprechende Rotorblatt 3 in einer Richtung der Vertikalen V ausgerichtet, weist das Rotorblatt 3 mit einer Rotorblattspitze nach oben. In dieser Drehstellung bewirkt das Eigengewicht des Rotorblatts 3 kein eigengewichtsabhängiges Biegemoment. Beträgt der Drehwinkel $\alpha$ eines Rotorblatts 3 (i=1) wie in Figur 2 dargestellt z.B. 90°, ist das entsprechende Rotorblatt 3 horizontal ausgerichtet. In dieser Drehstellung bewirkt das Eigengewicht des Rotorblatts 3 das maximale eigengewichtsabhängige Biegemoment $M_g$. Das drehwinkel- bzw. zeitabhängige und eigengewichtsabhängige Biegemoment $M_{gi}$ kann beispielsweise durch $\sin(\alpha) \cdot M_{stat}$ ausgedrückt werden. $M_{stat}$ bezeichnet hierbei vorzugsweise das statische Moment des Rotorblatts, das wiederum ein Produktions- bzw. Anlagenparameter ist. Das statische Moment $M_{stat}$ bezeichnet jenes Moment das bei einer Ausrichtung senkrecht zur Erdbeschleunigung auf die Blattwurzel wirkt.

Insgesamt ergibt sich näherungsweise für das in der Rotorebene E auf jedes einzelne Rotorblatt 3 wirkende Biegemoment (In-plane-Moment)

$$M_{zB} = \sin(\alpha)\cdot M_{stat} + 1/3\cdot M_a.$$

**Figur 3** zeigt ein bevorzugtes Ausführungsbeispiel eines Rotorblatts 3 in einer Seitenansicht. Das Rotorblatt 3 weist eine Unterseite 3a', d.h. eine dem das Rotorblatt 3 anströmenden Wind zugewandte Druckseite, und eine Oberseite 3a", d.h. eine dem anströmende Wind abgewandte Saugseite auf.

Das Rotorblatt 3 ist bezüglich einer Rotorebene E, welche durch die Rotationsbewegung des Rotorblatts 3 um eine Rotorachse definiert ist gedreht, beispielsweise um eine besonders günstige Anströmung des Rotorblatts 3 zu ermöglichen. Insbesondere ist eine Sehnenfläche 3a des Rotorblatts 3, welche vorzugsweise entlang einer Rotorblattlängsachse (senkrecht zur Figurenebene) von einer Rotorblattvorderkante in Richtung einer Rotorblatthinterkante verläuft, um einen Einstellwinkel $\Theta$ gegen die Rotorebene E gedreht. Wenn das Rotorblatt 3 derart gedreht ist, liefern Sensordaten einer Sensoreinrichtung, die dazu eingerichtet ist, ein auf das Rotorblatt 3 senkrecht zur Sehnenfläche 3a wirkendes Schlagmoment $M_{fB}$ zu erfassen, nur eine fehlerbehaftete Schätzung eines senkrecht zur Rotorebene E auf das Rotorblatt 3 wirkenden Biegemoments $M_{yB}$, welches auch als Out-of-plane-Moment bezeichnet wird. Dasselbe gilt auch für Sensordaten einer Sensoreinrichtung, die dazu eingerichtet ist, ein auf das Rotorblatt 3 parallel zur Sehnenfläche 3a, insbesondere in der Sehnenfläche 3a, und senkrecht zur Rotorblattlängsachse liegendes Schwenkmoment $M_{eB}$ zu erfassen.

Der Fehler kann in konventioneller, messtechnisch aufwändiger Weise ausgeglichen werden, indem das erfasste, senkrecht zur Sehnenfläche 3a und insbesondere senkrecht zu einer Rotorblattlängsachse auf das Rotorblatt 3 wirkende Schlagmoment $M_{fB}$ unter Berücksichtigung eines parallel zur Sehnenfläche 3a und senkrecht zur Rotorblattlängsachse auf das Rotorblatt 3 wirkenden Schwenkmoments $M_{eB}$ transformiert wird.

Kann das parallel zur Sehnenfläche 3a und senkrecht zur Rotorblattlängsachse auf das Rotorblatt 3 wirkende Schwenkmoment $M_{eB}$ nicht erfasst werden, beispielsweise weil vorteilhaft entsprechende Sensorelemente eingespart wurden, ist es erfindungsgemäß jedoch trotzdem möglich, dass Out-of-plane-Moment $M_{yB}$ durch eine Transformation des erfassten, senkrecht zur Sehnenfläche 3a auf das Rotorblatt 3 wirkenden Schlagmoments $M_{fB}$ unter Berücksichtigung eines unabhängig ermittelten In-plane-Moments $M_{zB}$ (siehe Figur 2) präzise und zuverlässig zu ermitteln. Dabei wird in bevorzugter Weise die Wirkrichtung des erfassten Schlagmoments $M_{fB}$ berücksichtigt, z.B. über den Einstellwinkel $\Theta$, aus welchem die Ausrichtung des erfassten Schlagmoments $M_{fB}$ zum Out-of-plane-Moment $M_{yB}$ abgeleitet werden kann. Sollte die Wirkrichtung des erfassten Schlagmoments nicht senkrecht zur Sehnenfläche 3a liegen, kann zusätzlich auch ein Winkel zwischen dessen Wirkrichtung und der Sehnenfläche 3a berücksichtigt werden.

Dass Out-of-plane-Moment $M_{yB}$ kann beispielsweise wie folgt in Komponenten des Schlagmoments $M_{fB}$ und des Schwenkmoments $M_{eB}$ ausgedrückt werden:

$$M_{yB} = \cos(\Theta)\cdot M_{fB} - \sin(\Theta)\cdot M_{eB}.$$

Dass In-plane-Moment $M_{zB}$ kann dagegen beispielsweise wie folgt in Komponenten des Schlagmoments $M_{fB}$ und des Schwenkmoments $M_{eB}$ ausgedrückt werden:

$$M_{zB} = \sin(\Theta)\cdot M_{fB} + \cos(\Theta)\cdot M_{eB},$$

woraus sich durch Umformung eine Gleichung

$$M_{eB} = (M_{zB} - \sin(\Theta)\cdot M_{fB})/\cos(\Theta)$$

ergibt. Das Out-of-plane-Moment $M_{yB}$ kann dann unabhängig vom parallel zur Sehnenfläche 3a auf das Rotorblatt 3 wirkenden Schwenkmoments $M_{eB}$ wie folgt ausgedrückt werden:

$$M_{yB} = \cos(\Theta)\cdot M_{fB} - \sin(\Theta)\cdot(M_{zB} - \sin(\Theta)\cdot M_{fB})/\cos(\Theta).$$

Ein derart, insbesondere mittels nur zwei Sensorelementen einer Sensoreinrichtung, die im Bereich einer Rotorblattwurzel beispielsweise einander gegenüberliegend auf der Oberseite 3a" und auf der Unterseite 3a' des Rotorblatts 3 angeordnet und dazu eingerichtet sind, eine Biegung des Rotorblatts 3 auf den einander gegenüberliegenden Seiten des Rotorblatts 3 zu messen, ermitteltes Out-of-plane-Moment $M_{yB}$ kann vorteilhaft zur Regelung der Windenergieanlage, insbesondere des Einstellwinkels $\Theta$, eingesetzt werden.

**Figur 4** zeigt ein zweites bevorzugtes Ausführungsbeispiel einer Windenergieanlage 1, bei der eine Gondel 5 um einen Kippwinkel $\tau$ (auch Tiltwinkel genannt) gegenüber dem Horizont H verkippt ist und die einen Rotor 2 mit mehreren Rotorblättern 3 aufweist, die um eine Rotorachse R drehbar gelagert sind. Die Verkippung der Gondel 5 resultiert auch in einer Verkippung einer Rotorebene E, die senkrecht bezüglich der Rotorachse R angeordnet ist, gegenüber einer Vertikalen V um den Kippwinkel $\tau$.

Die Rotorblätter 3 sind bevorzugt zusätzlich um einen Konuswinkel $\varphi$ gegenüber der Rotorebene E gekippt, so dass sie sich bei Rotation um die Rotorachse R auf der Mantelfläche eines Konus, insbesondere eines Kegelstumpfes, bewegen. Mit anderen Worten überstreichen die Rotorblätter 3 bei Bewegung eine konusförmige Fläche. Ein Anteil eines auf jedes der Rotorblätter 3 wirkenden In-plane-Moments, der auf das Eigengewicht der Rotorblätter 3 zurückgeht, ist daher nun nicht nur drehwinkelabhängig (siehe Figur 2), sondern auch abhängig vom Kippwinkel $\tau$ und/oder vom Konuswinkel $\varphi$. Insbesondere tragen die entsprechenden, in Richtung der Vertikalen V wirkenden Gewichtskräfte nun auch einen Teil zu senkrecht zur von den Rotorblättern 3 bei der Rotation um die Rotorachse R überstrichenen Fläche, d.h. der Mantelfläche des Konus, auf die Rotorblätter 3 wirkenden Biegemomenten, d.h. den Out-of-plane-Momenten, bei.

Um die auf die Rotorblätter 3 wirkenden Gewichtskräfte in dem in Figur 4 gezeigten Fall zu berücksichtigen, kann eine Korrekturrechnung ausgeführt werden, in deren Rahmen die Gewichtskräfte in die Mantelebene des Konus bzw. senkrecht dazu transformiert werden. Für das korrigierte In-plane-Moment ergibt sich, mit

$$M_0(\alpha) = |\cos(\alpha)| \cdot \sin(\tau - \cos(\alpha) \cdot \varphi) M_g,$$

folgendes:

$$M_{zB}{}' = \cos(\sin(\alpha)(\tau - \cos(\alpha)\varphi)) \cdot \sin(\alpha) \cdot M_g + \sin(\sin(\alpha)(\tau - \cos(\alpha)\varphi)) \cdot M_0(\alpha) + 1/3 \cdot M_\alpha.$$

Für das korrigierte Out-of-plane-Moment ergibt sich entsprechend

$$M_{yB}{}' = M_{yB} - \sin(\sin(\alpha)(\tau - \cos(\alpha)\varphi)) \cdot \sin(\alpha) \cdot M_g - \cos(\sin(\alpha)(\tau - \cos(\alpha)\varphi)) \cdot M_0(\alpha).$$

Dabei ist $M_{yB}$ das unkorrigierte Out-of-plane-Moment

$$M_{yB} = \cos(\Theta) \cdot M_{fB} - \sin(\Theta) \cdot (M_{zB} - \sin(\Theta) \cdot M_{fB})/\cos(\Theta),$$

in welches die Werte $M_{fB}$ eines Schlagmoments eingehen, das senkrecht zur Sehnenfläche des Rotorblatts gemessen wird (siehe Figur 3).

**Figur 5** zeigt eine bevorzugte Ausführungsform eines Verfahrens 100 zum Steuern einer Windenergieanlage mit einem Rotor, der mindestens ein mittels einer Rotornabe mit einer Rotorachse des Rotors verbundenes Rotorblatt aufweist. In einem Verfahrensschritt S1 wird vorzugsweise eine Drehstellung des Rotorblatts bezüglich der Rotorachse erfasst und Positionsdaten P ausgegeben, die einen Wert der Drehstellung charakterisieren. In einem weiteren Verfahrensschritt S2 kann ein auf die Rotorachse wirkendes Antriebsmoment erfasst und Antriebsmomentdaten M, die einen Wert des Antriebsmoments charakterisieren, ausgegeben werden. Auf Grundlage der Positionsdaten P und der Antriebsmomentdaten M kann dann ein In-plane-Moment $M_{zB}$ für das Rotorblatt in einem Verfahrensschritt S3 ermittelt werden. Der entsprechende Wert des In-plane-Moments $M_{zB}$ wird ausgegeben.

Dabei wird das In-plane-Moment $M_{zB}$ in Verfahrensschritt S3 in bevorzugter Weise unter Berücksichtigung eines Kippwinkels der Rotorachse gegen eine Horizontale und/oder eines Konuswinkels der Rotorblätter gegen eine senkrecht zur Rotorachse verlaufende Rotorebene ermittelt, wodurch sich vorteilhaft ein korrigiertes In-plane-Moment ergibt.

In einem weiteren Verfahrensschritt S4 wird vorzugsweise ein auf das Rotorblatt senkrecht zu einer Rotorblattlängsachse wirkendes Schlagmoment erfasst und Sensordaten S ausgegeben, die einen Wert des erfassten Schlagmoments charakterisieren. Aus diesen Sensordaten S sowie dem ermittelten In-plane-Moment $M_{zB}$ unter Berücksichtigung der Wirkrichtung des ermittelten Schlagmoments relativ zu einer Sehnenfläche des Rotorblatts kann in einem weiteren Verfahrensschritt S5 ein Out-of-plane-Moment $M_{yB}$ ermittelt werden. Der entsprechende Wert des Out-of-plane-Moments $M_{yB}$ wird ausgegeben.

Auch hierbei kann in bevorzugter Weise der Kippwinkel der Rotorachse gegen eine Horizontale und/oder der Konuswinkel der Rotorblätter gegen eine senkrecht zur Rotorachse verlaufende Rotorebene berücksichtigt werden, wodurch sich vorteilhaft ein korrigiertes Out-of-plane-Moment ergibt.

Anhand des ermittelten Werts des, vorzugsweise korrigierten, In-plane-Moments $M_{zB}$ und/oder anhand des ermittelten Werts des, vorzugsweise korrigierten, Out-of-plane-Moments $M_{yB}$ kann in einem weiteren Verfahrensschritt S6 die Windenergieanlage gesteuert, insbesondere ein Einstellwinkel des Rotorblatts eingestellt werden.

Vorzugsweise wird auf Grundlage der ermittelten Werte des, vorzugsweise korrigierten, In-plane-Moments $M_{zB}$ und/oder des, vorzugsweise korrigierten, Out-of-plane-Moments $M_{yB}$ eine Umweltbedingung ermittelt und die Windenergieanlage auf Grundlage der ermittelten Umweltbedingung gesteuert. Dabei können gegebenenfalls weitere sensorisch erfassten Größen oder daraus abgeleitete Information, welche den Betriebszustand der Windenergieanlage kennzeichnen, berücksichtigt werden.

Beispielsweise kann auf Grundlage der, gegebenenfalls über einen gewissen Zeitraum, bei verschiedenen Einstellwinkeln der Rotorblätter, bei verschiedenen azimutalen Ausrichtungen der Gondel und/oder dergleichen, ermittelten Werte des In-plane- und Out-of-plane-Moments $M_{zB}$, $M_{yB}$ eine Windgeschwindigkeit aus einer Lookup-Tabelle bzw. einer Kennlinie ermittelt werden.

Bezuqszeichenliste

| | |
|---|---|
| 1 | Windenergieanlage |
| 2 | Rotor |
| 3 | Rotorblatt |
| 3a | Sehnenfläche |
| 3a', 3a" | Unterseite, Oberseite |
| 3b | Rotorblattwurzel |
| 4 | Rotornabe |
| 5 | Gondel |
| 6 | Turm |

| | |
|---|---|
| 10, 11 | Vorrichtung |
| 20 | Positionserfassungseinrichtung |
| 30 | Antriebsmomenterfassungseinrichtung |
| 40 | Sensoreinrichtung |
| 50 | Auswertungseinrichtung |
| 60 | Steuerungseinrichtung |

| | |
|---|---|
| 100,200 | Verfahren |

| | |
|---|---|
| S1 - S6 | Verfahrensschritte |

| | |
|---|---|
| R | Rotorachse |
| E | Rotorebene |
| A | Drehachse |
| H | Horizont |
| V | Vertikale |
| WR | Windrichtung |

| | |
|---|---|
| $M_g$ | Eigengewichtsbiegemoment |
| $M_a$ | Antriebsmoment |
| $M_{zB}$ | In-plane-Moment |
| $M_{zB}'$ | korrigiertes In-plane-Moment |
| $M_{yB}$ | Out-of-plane-Moment |
| $M_{yB}'$ | korrigiertes Out-of-plane-Moment |
| $M_{fB}$ | senkrecht zur Sehnenfläche wirkendes Schlagmoment |
| $M_{eB}$ | parallel zur Sehnenfläche wirkendes Schwenkmoment |

| | |
|---|---|
| $\alpha$ | Drehwinkel |
| $\Theta$ | Einstellwinkel |
| $\tau$ | Kippwinkel |
| $\varphi$ | Konuswinkel |

P    Positionsdaten
M    Antriebsmomentdaten
S    Sensordaten

**Patentansprüche**

1.  Vorrichtung (10) zum Steuern einer Windenergieanlage (1) mit einem Rotor (2), der mindestens ein mittels einer Rotornabe (4) mit einer Rotorachse (R) des Rotors (2) verbundenes Rotorblatt (3) aufweist, aufweisend:

    - eine Positionserfassungseinrichtung (20), die dazu eingerichtet ist, eine Drehstellung des Rotorblatts (3) bezüglich der Rotorachse (R) zu erfassen und Positionsdaten (P) auszugeben, die einen Wert der Drehstellung charakterisieren;
    - eine Sensoreinrichtung (40), die am und/oder im Rotorblatt (3) angeordnet und dazu eingerichtet ist, ein auf das Rotorblatt (3) senkrecht zu einer Rotorblattlängsachse und vorzugsweise senkrecht zu einer Sehnenfläche (3a) des Rotorblatts (3) wirkendes Schlagmoment ($M_{fB}$,) zu ermitteln und Sensordaten (S) auszugeben, die einen Wert des ermittelten Schlagmoments ($M_{fB}$,) charakterisieren;
    - eine Auswertungseinrichtung (50), die dazu eingerichtet ist, mittels der Positionsdaten (P) einen Wert eines In-plane-Moments ($M_{zB}$) des Rotorblatts (3) zu ermitteln und aus dem ermittelten In-plane-Moment ($M_{zB}$) und den Sensordaten (S) unter Berücksichtigung einer Wirkrichtung des ermittelten Schlagmoments ($M_{fB}$) relativ zur Sehnenfläche (3a) des Rotorblatts (3), insbesondere einer Richtung einer Messachse der Sensoreinrichtung (40), einen Wert eines Out-of-plane-Moments ($M_{yB}$) des Rotorblatts (3) zu ermitteln; und
    - eine Steuerungseinrichtung (60), die dazu eingerichtet ist, die Windenergieanlage (1) auf Grundlage des ermittelten Werts des In-plane-Moments ($M_{zB}$) und/oder des ermittelten Werts des Out-of-plane-Moments ($M_{yB}$) zu steuern.

2.  Vorrichtung (10) nach Anspruch 1, des Weiteren aufweisend

    - eine Antriebsmomenterfassungseinrichtung (30), die dazu eingerichtet ist, ein auf die Rotorachse (R) wirkendes Antriebsmoment ($M_a$) zu erfassen und Antriebsmomentdaten (M) auszugeben, die einen Wert des Antriebsmoments ($M_a$) charakterisieren,

    wobei das In-plane-Moment ($M_{zB}$) des Weiteren mittels der Antriebsmomentdaten (M) ermittelt wird.

3.  Vorrichtung (10) nach einem der vorangehenden Ansprüche, wobei

    - die Auswertungseinrichtung (50) dazu eingerichtet ist, auf Grundlage des ermittelten Werts des In-plane-Moments ($M_{zB}$) und/oder des ermittelten Werts des Out-of-plane-Moments ($M_{yB}$) eine Umweltbedingung zu ermitteln, und
    - die Steuerungseinrichtung (60) dazu eingerichtet ist, die Windenergieanlage (1) auf Grundlage der ermittelten Umweltbedingung zu steuern.

4.  Vorrichtung (10) nach einem der vorangehenden Ansprüche, wobei die Steuerungseinrichtung (60) dazu eingerichtet ist, auf Grundlage des ermittelten Werts des Out-of-plane-Moments ($M_{yB}$) einen Einstellwinkel ($\Theta$) des Rotorblatts (3) einzustellen.

5.  Vorrichtung (10) nach einem der vorangehenden Ansprüche, wobei die Sensoreinrichtung (40) ausschließlich eine Messachse aufweist, insbesondere ausschließlich zwei im Bereich einer Rotorblattwurzel (3b) auf der Sehnenfläche (3a) nebeneinander oder auf einander gegenüberliegenden Seiten der Sehnenfläche (3a) angeordnete Sensorelemente aufweist.

6.  Vorrichtung (10) nach einem der vorhergehenden Ansprüche, wobei Sensorelemente der Sensoreinrichtung (40) als optische Dehnungsmesstreifen oder als Stabsensoren ausgebildet sind.

7.  Verfahren (100) zum Steuern einer Windenergieanlage (1) mit einem Rotor (2), der mindestens ein mittels einer Rotornabe (4) mit einer Rotorachse (R) des Rotors (2) verbundenes Rotorblatt (3) aufweist, aufweisend die folgenden Schritte:

- Erfassen (S1) einer Drehstellung des Rotorblatts (3) bezüglich der Rotorachse (R) und Ausgeben von Positionsdaten (P), die einen Wert der Drehstellung charakterisieren;
- Ermitteln (S4) eines auf das Rotorblatt (3) senkrecht zu einer Rotorblattlängsachse und vorzugsweise senkrecht zu einer Sehnenfläche (3a) des Rotorblatts (3) wirkenden Schlagmoments ($M_{fB}$) und Ausgeben von Sensordaten (S), die einen Wert des ermittelten Schlagmoments ($M_{fB}$) charakterisieren;
- Ermitteln (S3) eines Werts eines In-plane-Moments ($M_{zB}$) des Rotorblatts (3) mittels der Positionsdaten (P) und Ermitteln (S5) eines Werts eines Out-of-plane-Moments ($M_{yB}$) des Rotorblatts (3) mittels dem ermittelten In-plane-Moment ($M_{zB}$) und den Sensordaten (S) unter Berücksichtigung einer Wirkrichtung, insbesondere einer Richtung einer Messachse der Sensoreinrichtung (40), des ermittelten Schlagmoments ($M_{fB}$) relativ zur Sehnenfläche (3a) des Rotorblatts (3); und
- Steuern (S6) der Windenergieanlage (1) auf Grundlage des ermittelten Werts des In-plane-Moments ($M_{zB}$) und/oder des ermittelten Werts des Out-of-plane-Moments ($M_{yB}$).

8. Verfahren (100) nach Anspruch 7, des Weiteren den folgenden Schritt aufweisend:

- Erfassen (S2) eines auf die Rotorachse (R) wirkenden Antriebsmoments ($M_a$) und Ausgeben von Antriebsmomentdaten (M), die einen Wert des Antriebsmoments ($M_a$) charakterisieren;

wobei das In-plane-Moment ($M_{zB}$) des Weiteren mittels der Antriebsmomentdaten (M) ermittelt wird.

9. Verfahren (100) nach Anspruch 7 oder 8, wobei auf Grundlage des ermittelten Werts des In-plane-Moments ($M_{zB}$) und/oder des ermittelten Werts des Out-of-plane-Moments ($M_{yB}$) eine Umweltbedingung ermittelt und die Windenergieanlage (1) auf Grundlage der ermittelten Umweltbedingung gesteuert wird.

10. Verfahren (100) nach einem der Ansprüche 7 bis 9, wobei auf Grundlage des ermittelten Wert des Out-of-plane-Moments ($M_{yB}$) ein Einstellwinkel ($\Theta$) des Rotorblatts (3) eingestellt wird.

11. Verfahren (100, 200) nach einem der Ansprüche 8 bis 10, wobei auf Grundlage der Antriebsmomentdaten (M) ein individuelles auf das Rotorblatt (3) wirkende Blattantriebsmoment ermittelt wird.

12. Verfahren (100, 200) nach Anspruch 11, wobei das individuelle Blattantriebsmoment unter Berücksichtigung mindestens eines der folgenden Parameter ermittelt wird:

- Positionsdaten (P);
- Windenergieanlagenkenngrößen;
- Umweltbedingung; und/oder
- weiteren Sensordaten (S), die von mindestens einer weiteren, an und/oder in einem weiteren Rotorblatt (3) angeordneten Sensoreinrichtung (40) ausgegeben werden.

13. Verfahren (100, 200) nach einem der Ansprüche 7 bis 12, wobei mindestens ein Betriebsparameter der Windenergieanlage (1) geschätzt und/oder erfasst und das Antriebsmoment ($M_a$) auf Grundlage des mindestens einen geschätzten und/oder erfassten Betriebsparameter ermittelt wird.

14. Verfahren (100, 200) nach einem der Ansprüche 7 bis 13, wobei die Sensordaten (S) derart transformiert werden, dass die Sensordaten einen Anteil des erfassten Schlagmoments ($M_{fB}$) am Out-of-plane-Moment ($M_{yB}$) charakterisieren.

15. Verfahren (100, 200) nach einem der Ansprüche 7 bis 14, wobei

- für jedes der Rotorblätter (3) des Rotors (2) ein Wert des Out-of-plane-Moments ($M_{yB}$) ermittelt wird;
- auf Grundlage der für jedes der Rotorblätter ermittelten Werte des Out-of-plane-Moments ($M_{yB}$) ein Giermoment und/oder ein Nickmoment des Rotors (2) ermittelt wird, und
- der Einstellwinkel ($\Theta$) des Rotorblatts (3) auf Grundlage des ermittelten Giermoments und/oder Nickmoments eingestellt wird.

16. Verfahren (100, 200) nach einem der Ansprüche 7 bis 15, wobei der Wert des auf das Rotorblatt (3) wirkenden In-plane-Moments ($M_{zB}$) und/oder Out-of-plane-Moments ($M_{yB}$) zusätzlich unter Berücksichtigung eines Kippwinkels ($\tau$) der Rotorachse (R) bezüglich des Horizonts (H) und/oder eines Ausrichtungswinkels ($\varphi$) des Rotorblatts (3)

bezüglich einer senkrecht zur Rotorachse (R) liegenden Rotorebene (E) ermittelt wird.

**Claims**

1. A device (10) for controlling a wind energy installation (1), the wind energy installation (1) comprising a rotor (2) which has at least one rotor blade (3) which is connected to a rotor axis (R) of the rotor (2) by means of a rotor hub (4), wherein the device (10) for controlling the wind energy installation (1) comprises:

   - a position detection device (20) which is set up to detect a rotational position of the rotor blade (3) with respect to the rotor axis (R) and to output positional data (P) which characterise a value of the rotational position;
   - a sensor device (40) which is arranged on and / or in the rotor blade (3) and is set up to determine an impact moment ($M_{fB}$,) acting on the rotor blade (3) perpendicular to a longitudinal axis of the rotor blade and preferably perpendicular to a chord surface (3a) of the rotor blade (3), and to output sensor data (S) which characterise a value of the determined impact moment ($M_{fB}$,);
   - an evaluation device (50) which is set up to determine, by means of the positional data (P), a value of an in-plane moment ($M_{zB}$) of the rotor blade (3) and to determine, from the determined in-plane moment ($M_{zB}$) and the sensor data (S) taking into account an effective direction of the determined impact moment ($M_{fB}$) relative to the chord surface (3a) of the rotor blade (3), in particular a direction of a measuring axis of the sensor device (40), a value of an out-of-plane moment ($M_{yB}$) of the rotor blade (3); and
   - a control device (60) which is set up to control the wind energy installation (1) on the basis of the determined value of the in-plane moment ($M_{zB}$) and / or on the basis of the determined value of the out-of-plane moment ($M_{yB}$).

2. The device (10) according to claim 1, further comprising

   - a drive torque detection device (30) which is set up to detect a drive torque ($M_a$) acting on the rotor axis (R) and to output drive torque data (M) which characterise a value of the drive torque ($M_a$),

   wherein the in-plane moment ($M_{zB}$) is further determined by means of the drive torque data (M).

3. The device (10) according to any one of the preceding claims, wherein

   - the evaluation device (50) is set up to determine an environmental condition on the basis of the determined value of the in-plane moment ($M_{zB}$) and / or on the basis of the determined value of the out-of-plane moment ($M_{yB}$), and
   - the control device (60) is set up to control the wind energy installation (1) on the basis of the determined environmental condition.

4. The device (10) according to any one of the preceding claims, wherein the control device (60) is set up to set a setting angle ($\Theta$) of the rotor blade (3) on the basis of the determined value of the out-of-plane moment ($M_{yB}$).

5. The device (10) according to any one of the preceding claims, wherein the sensor device (40) has exclusively one measuring axis, in particular has exclusively two sensor elements which are arranged in the region of a rotor blade root (3b) on the chord surface (3a) next to one another or on opposite sides of the chord surface (3a).

6. The device (10) according to any one of the preceding claims, wherein sensor elements of the sensor device (40) are constructed in the form of optical strain gauges or in the form of rod sensors.

7. A method (100) of controlling a wind energy installation (1), the wind energy installation (1) comprising a rotor (2) which has at least one rotor blade (3) which is connected to a rotor axis (R) of the rotor (2) by means of a rotor hub (4), wherein the method comprises the following steps of:

   - detecting (S1) a rotational position of the rotor blade (3) with respect to the rotor axis (R) and outputting positional data (P) which characterise a value of the rotational position;
   - determining (S4) an impact moment ($M_{fB}$) acting on the rotor blade (3) perpendicular to a longitudinal axis of the rotor blade and preferably perpendicular to a chord surface (3a) of the rotor blade (3), and outputting sensor data (S) which characterise a value of the determined impact moment ($M_{fB}$);
   - determining (S3), by means of the positional data (P), a value of an in-plane moment ($M_{zB}$) of the rotor blade (3) and determining (S5), by means of the determined in-plane moment ($M_{zB}$) and the sensor data (S) taking into account an effective direction of the determined impact moment ($M_{fB}$) relative to the chord surface (3a) of the rotor blade (3), in particular a direction of a measuring axis of the sensor device (40) of the determined impact moment ($M_{fB}$) relative to the chord surface (3a) of the rotor blade (3), a value of an out-of-plane moment ($M_{yB}$) of the rotor blade (3); and
- controlling (S6) the wind energy installation (1) on the basis of the determined value of the in-plane moment ($M_{zB}$) and / or on the basis of the determined value of the out-of-plane moment ($M_{yB}$).

8. The method (100) according to claim 7, further comprising the following step of:

- detecting (S2) a drive torque ($M_a$) acting on the rotor axis (R), and outputting drive torque data (M) which characterise a value of the drive torque ($M_a$);

wherein the in-plane moment ($M_{zB}$) is further determined by means of the drive torque data (M).

9. The method (100) according to claim 7 or 8, wherein an environmental condition is determined on the basis of the determined value of the in-plane moment ($M_{zB}$) and / or on the basis of the determined value of the out-of-plane moment ($M_{yB}$), and the wind energy installation (1) is controlled on the basis of the determined environmental condition.

10. The method (100) according to any one of the claims 7 to 9, wherein a setting angle ($\Theta$) of the rotor blade (3) is set on the basis of the determined value of the out-of-plane moment ($M_{yB}$).

11. The method (100, 200) according to any one of the claims 8 to 10, wherein an individual blade drive torque which acts on the rotor blade (3) is determined on the basis of the drive torque data (M).

12. The method (100, 200) according to claim 11, wherein the individual blade drive torque is determined taking into account at least one of the following parameters:

- positional data (P);
- wind energy installation characteristics;
- environmental condition; and / or
- further sensor data (S) which are output by at least one further sensor device (40) which is arranged on and / or in a further rotor blade (3).

13. The method (100, 200) according to any one of the claims 7 to 12, wherein at least one operating parameter of the wind energy installation (1) is estimated and / or detected and the drive torque ($M_a$) is determined on the basis of the at least one estimated and / or detected operating parameter.

14. The method (100, 200) according to any one of the claims 7 to 13, wherein the sensor data (S) are transformed in such a way that the sensor data characterise a proportion of the detected impact moment ($M_{fB}$) in the out-of-plane moment ($M_{yB}$).

15. The method (100, 200) according to any one of the claims 7 to 14, wherein

- a value of the out-of-plane moment ($M_{yB}$) is determined for each of the rotor blades (3) of the rotor (2);
- a yaw moment and / or a pitch moment of the rotor (2) is determined on the basis of the values of the out-of-plane moment ($M_{yB}$) which have been determined for each of the rotor blades, and
- the setting angle ($\Theta$) of the rotor blade (3) is adjusted on the basis of the determined yaw moment and / or on the basis of the determined pitch moment.

16. The method (100, 200) according to any one of the claims 7 to 15, wherein the value of the in-plane moment ($M_{zB}$) and / or out-of-plane moment ($M_{yB}$) which acts on the rotor blade (3) is additionally determined taking into account a tilt angle ($\tau$) of the rotor axis (R) with respect to the horizon (H) and / or an alignment angle ($\varphi$) of the rotor blade (3) with respect to a rotor plane (E) which extends perpendicular to the rotor axis (R).

**Revendications**

1. Dispositif (10) de commande d'une éolienne (1) avec un rotor (2) qui présente au moins une pale de rotor (3) reliée au moyen d'un moyeu de rotor (4) à un axe de rotor (R) du rotor (2), présentant :

   - un dispositif de détection de position (20) qui est conçu afin de détecter une position de rotation de la pale de rotor (3) par rapport à l'axe de rotor (R) et de sortir des données de position (P) qui caractérisent une valeur de la position de rotation ;
   - un dispositif capteur (40) qui est agencé au niveau et/ou dans la pale de rotor (3) et est conçu afin de déterminer un moment de choc ($M_{fB}$,) agissant sur la pale de rotor (3) perpendiculairement à un axe longitudinal de pale de rotor et de préférence perpendiculairement à une surface de corde (3a) de la pale de rotor (3) et de sortir des données de capteur (S) qui caractérisent une valeur du moment de choc ($M_{fB}$,) déterminé ;
   - un dispositif d'évaluation (50) qui est conçu afin de déterminer au moyen des données de position (P) une valeur d'un moment dans le plan ($M_{zB}$) de la pale de rotor (3) et de déterminer à partir du moment dans le plan ($M_{zB}$) déterminé et des données de capteur (S) en tenant compte d'un sens d'action du moment de choc ($M_{fB}$) déterminé par rapport à la surface de corde (3a) de la pale de rotor (3), en particulier un sens d'un axe de mesure du dispositif capteur (40), une valeur d'un moment hors du plan ($M_{yB}$) de la pale de rotor (3) ; et
   - un dispositif de commande (60) qui est conçu afin de commander l'éolienne (1) sur la base de la valeur déterminée du moment dans le plan ($M_{zB}$) et/ou de la valeur déterminée du moment hors du plan ($M_{yB}$).

2. Dispositif (10) selon la revendication 1, présentant en outre

   - un dispositif de détection de moment d'entraînement (30) qui est conçu afin de détecter un moment d'entraînement ($M_a$) agissant sur l'axe de rotor (R) et de sortir des données de moment d'entraînement (M) qui caractérisent une valeur du moment d'entraînement ($M_a$),

   dans lequel le moment dans le plan ($M_{zB}$) est déterminé en outre au moyen des données de moment d'entraînement (M).

3. Dispositif (10) selon l'une quelconque des revendications précédentes, dans lequel

   - le dispositif d'évaluation (50) est conçu afin de déterminer sur la base de la valeur déterminée du moment dans le plan ($M_{zB}$) et/ou de la valeur déterminée du moment hors du plan ($M_{yB}$) une condition environnementale, et
   - le dispositif de commande (60) est conçu afin de commander l'éolienne (1) sur la base de la condition environnementale déterminée.

4. Dispositif (10) selon l'une quelconque des revendications précédentes, dans lequel le dispositif de commande (60) est conçu afin de régler sur la base de la valeur déterminée du moment hors du plan ($M_{yB}$) un angle de réglage ($\theta$) de la pale de rotor (3).

5. Dispositif (10) selon l'une quelconque des revendications précédentes, dans lequel le dispositif capteur (40) présente exclusivement un axe de mesure, en particulier exclusivement deux éléments de capteur agencés dans la zone d'un pied de pale de rotor (3b) sur la surface de corde (3a) l'un à côté de l'autre ou sur des côtés opposés l'un à l'autre de la surface de corde (3a).

6. Dispositif (10) selon l'une quelconque des revendications précédentes, dans lequel des éléments de capteur du dispositif capteur (40) sont réalisés comme jauges de contrainte optiques ou comme capteurs à barre.

7. Procédé (100) de commande d'une éolienne (1) avec un rotor (2) qui présente au moins une pale de rotor (3) reliée au moyen d'un moyeu de rotor (4) à un axe de rotor (R) du rotor (2), présentant les étapes suivantes :

   - la détection (S1) d'une position de rotation de la pale de rotor (3) par rapport à l'axe de rotor (R) et la sortie de données de position (P) qui caractérisent une valeur de la position de rotation ;
   - la détermination (S4) d'un moment de choc ($M_{fB}$) agissant sur la pale de rotor (3) perpendiculairement à un axe longitudinal de pale de rotor et de préférence perpendiculairement à une surface de corde (3a) de la pale de rotor (3) et la sortie de données de capteur (S) qui caractérisent une valeur du moment de choc ($M_{fB}$) déterminé ;

- la détermination (S3) d'une valeur d'un moment dans le plan ($M_{zB}$) de la pale de rotor (3) au moyen des données de position (P) et la détermination (S5) d'une valeur d'un moment hors du plan ($M_{yB}$) de la pale de rotor (3) au moyen du moment dans le plan ($M_{zB}$) déterminé et des données de capteur (S) en tenant compte d'un sens actif, en particulier un sens d'un axe de mesure du dispositif capteur (40), du moment de choc ($M_{fB}$) déterminé par rapport à la surface de corde (3a) de la pale de rotor (3) ; et

- la commande (S6) de l'éolienne (1) sur la base de la valeur déterminée du moment dans le plan ($M_{zB}$) et/ou de la valeur déterminée du moment hors du plan ($M_{yB}$).

**8.** Procédé (100) selon la revendication 7, présentant en outre l'étape suivante :

- la détection (S2) d'un moment d'entraînement ($M_a$) agissant sur l'axe de rotor (R) et la sortie de données de moment d'entraînement (M) qui caractérisent une valeur du moment d'entraînement (Ma) ;

dans lequel le moment dans le plan ($M_{zB}$) est en outre déterminé au moyen de données de moment d'entraînement (M).

**9.** Procédé (100) selon la revendication 7 ou 8, dans lequel sur la base de la valeur déterminée du moment dans le plan ($M_{zB}$) et/ou de la valeur déterminée du moment hors du plan ($M_{yB}$) une condition environnementale est déterminée et l'éolienne (1) est commandée sur la base de la condition environnementale déterminée.

**10.** Procédé (100) selon l'une quelconque des revendications 7 à 9, dans lequel un angle de réglage ($\theta$) de la pale de rotor (3) est réglé sur la base de la valeur déterminée du moment hors du plan ($M_{yB}$).

**11.** Procédé (100, 200) selon l'une quelconque des revendications 8 à 10, dans lequel un moment d'entraînement de pale individuel agissant sur la pale de rotor (3) est déterminé sur la base des données de moment d'entraînement (M).

**12.** Procédé (100, 200) selon la revendication 11, dans lequel le moment d'entraînement de pale individuel est déterminé en tenant compte au moins d'un des paramètres suivants :

- des données de position (P) ;
- des grandeurs caractéristiques d'éolienne ;
- une condition environnementale ; et/ou
- d'autres données de capteur (S) qui sont sorties par au moins un autre dispositif capteur (40) agencé au niveau et/ou dans une autre pale de rotor (3).

**13.** Procédé (100, 200) selon l'une quelconque des revendications 7 à 12, dans lequel au moins un paramètre de fonctionnement de l'éolienne (1) est estimé et/ou détecté et le moment d'entraînement ($M_a$) est déterminé sur la base d'au moins un paramètre de fonctionnement estimé et/ou détecté.

**14.** Procédé (100, 200) selon l'une quelconque des revendications 7 à 13, dans lequel les données de capteur (S) sont transformées de telle manière que les données de capteur caractérisent une part du moment de choc ($M_{fB}$) détecté au niveau du moment hors du plan ($M_{yB}$).

**15.** Procédé (100, 200) selon l'une quelconque des revendications 7 à 14, dans lequel

- pour chacune des pales de rotor (3) du rotor (2), une valeur du moment hors du plan ($M_{yB}$) est déterminée ;
- sur la base des valeurs déterminées pour chacune des pales de rotor du moment hors du plan ($M_{yB}$), un moment de lacet et/ou un moment de tangage du rotor (2) est déterminé, et
- l'angle de réglage ($\theta$) de la pale de rotor (3) est réglé sur la base du moment de lacet et/ou moment de tangage déterminé.

**16.** Procédé (100, 200) selon l'une quelconque des revendications 7 à 15, dans lequel la valeur du moment dans le plan ($M_{zB}$) agissant sur la pale de rotor (3) et/ou du moment hors du plan ($M_{yB}$) est en outre déterminée en tenant compte d'un angle de basculement (T) de l'axe de rotor (R) par rapport à l'horizon (H) et/ou d'un angle d'orientation ($\varphi$) de la pale de rotor (3) par rapport à un plan de rotor (E) se trouvant perpendiculairement à l'axe de rotor (R).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10219664 A1
- US 2016138571 A1
- US 2010014969 A1
- DE 19847982 C2